# EUROPÄISCHE PATENTSCHRIFT

(11) **EP 0 892 965 B1**
(45) Veröffentlichungstag und Bekanntmachung des Hinweises auf die Patenterteilung: **13.10.1999**
(21) Anmeldenummer: 97920617.4
(22) Anmeldetag: 03.04.1997
(51) Int. Cl.: G06K 9/34

(54) **VERFAHREN ZUR ERKENNUNG VON ZIFFERNFOLGEN MITTELS EINES GLEITENDEN RAHMENS**
METHOD FOR RECOGNIZING SEQUENCES OF NUMERALS USING A SLIDING FRAME
PROCEDE POUR LA DETECTION DE SEQUENCES NUMERIQUES AU MOYEN D'UN CADRE COULISSANT

(30) Priorität: 11.04.1996 DE 19614285
(43) Veröffentlichungstag der Anmeldung: 27.01.1999
(73) Patentinhaber: SIEMENS AKTIENGESELLSCHAFT, 80333 München (DE)
(72) Erfinder: CAESAR, Torsten, D-89079 Ulm (DE); GLOGER, Joachim, D-89346 Bibertal (DE); MANDLER, Eberhard, D-89075 Ulm (DE); STAMPA, Volker, D-56567 Neuwied (DE)
(86) Internationale Anmeldenummer: EP9701676
(87) Internationale Veröffentlichungsnummer: WO9738393

(56) Entgegenhaltungen:
- PROCEEDINGS OF THE SECOND INTERNATIONAL CONFERENCE ON DOCUMENT ANALYSIS AND RECOGNITION (CAT. NO.93TH0578-5), PROCEEDINGS OF 2ND INTERNATIONAL CONFERENCE ON DOCUMENT ANALYSIS AND RECOGNITION (ICDAR '93), TSUKUBA SCIENCE CITY, JAPAN, 20-22 OCT. 1993, ISBN 0-8186-4960-7, 1993, LOS ALAMITOS, CA, USA, IEEE COMPUT. SOC. PRESS, USA, Seiten 408-411, XP002035213 CAESAR T ET AL: "Preprocessing and feature extraction for a handwriting recognition system"

## Beschreibung

Die Erfindung betrifft ein Verfahren zur Erkennung von Ziffernfolgen.

Die maschinelle Erkennung von Ziffernfolgen ist von besonderer Bedeutung und seit längerem eingesetzt für die automatische Erkennung von Postleitzahlen in Briefverteilanlagen.

Hohe Erkennungsleistungen werden bei der Erkennung von einzelnen Ziffern erreicht (z.B.[1]). Für die Erkennung von Ziffernfolgen wird daher üblicherweise versucht, die aus der optischen Abtastung von Zeichenfolgen gewonnenen Bilder durch Segmentierung in Teilbereiche für Einzelzeichen zu zerlegen (z.B.[2],[3],[4]) und damit das Erkennungsproblem auf die Erkennung von Einzelzeichen zurückzuführen. Eine solche Segmentierung ist insbesondere für handschriftliche und/oder verbundene Zeichenfolgen schwierig und aufwendig.

Aus der Erkennung handgeschriebener Wörter ist es bereits bekannt, auf eine Segmentierung zu verzichten und die Erkennung anhand einer Folge von Merkmalsvektoren, die jeweils Eigenschaften eines schmalen Ausschnitts aus dem Schriftbild repräsentieren, unter Einsatz eines HMM (Hidden Markov Model)-Erkenners durchzuführen [6].

Eine besondere Bedeutung für den Einsatz eines solchen HMM-Erkenners kommt dabei der Extraktion der Merkmale der Merkmalsvektoren zu. Um die Merkmale hierbei zu extrahieren, werden in [7] mittels aufwendiger Projektionstechniken von Konturabschnitten bei fest vorgegebener Rahmengröße Ober- und Unterlängen als Gestaltunterschiede ermittelt.

Aufgabe der vorliegenden Erfindung ist es, ein für den Einsatz eines HMM-Erkenners zur Erkennung von Ziffernfolgen vorteilhaftes Verfahren anzugeben.

Die Erfindung ist im Patentanspruch 1 beschrieben. Die Unteransprüche enthalten vorteilhafte Ausgestaltungen und Weiterbildungen der Erfindung.

Die Erfindung bietet eine leistungsfähige Möglichkeit der Erkennung auch handgeschriebener und/oder verbundener Ziffernfolgen, insbesondere handgeschriebener Postleitzahlen. Die Extraktion der Merkmale für die Merkmalsvektoren berücksichtigt in besonders vorteilhafter Weise die Besonderheiten von Ziffernfolgen.

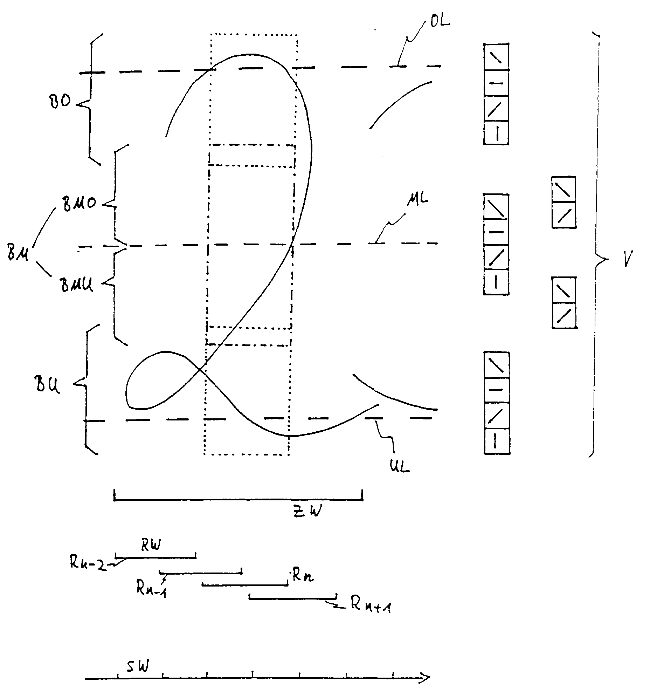

Die Erfindung ist nachfolgend anhand vorteilhafter Beispiele unter Bezugnahme auf die Abbildung noch eingehend veranschaulicht.

Skizziert ist als Ausschnitt aus einer Ziffernfolge eine Ziffer ,2` als durchgezogene Linie und Linienabschnitte F einer Folgeziffer. Im Realfall ist die durchgezogene Linie gegeben durch eine Folge von besetzten Rasterpunkten (Pixeln) innerhalb eines Rasters oder durch wenige Rasterpunkte als Stützpunkte einer Polygondarstellung. Aus dem bei der optischen Abtastung gewonnenen Rasterbild mit einer gewöhnlich mehrere Pixel umfassenden Strichbreite wird mittels bekannter Verfahren, z.B. über eine Konturrepräsentation [5] des Rasterbildes, eine Liniendarstellung in Form einer Pixelreihe mit einheitlicher Linienbreite von einem Pixel oder einer ideal dünnen polygonapproximierten Linie gewonnen. Für eine solche als Skelettierung sind mehrere Verfahren aus dem Stand der Technik bekannt. Weitere an sich bekannte Vorverarbeitungsschritte wie Rotation, Schernormierung etc. des Rasterbilds oder dessen Repräsentationen können vorgesehen sein. Aus der Liniendarstellung der Ziffernfolge werden nun anhand der vertikalen Minima und Maxima der Skelettlinien eine Oberlinie und eine Unterlinie als Schreiblinien des Ziffernfolgebildes geschätzt. Die Ermittlung der vertikalen Minima und Maxima erfolgt vorzugsweise mittels eines schrittweise horizontal verschobenen Fensters, das eine Fensterbreite größer als eine Ziffernbreite, insbesondere ungefähr gleich der doppelten Ziffernbreite aufweist, indem zu jeder Fensterposition ein vertikales Maximum und ein Minimum bestimmt und aus den beiden Wertefolgen für Maxima und Minima mittels einer Regressionsanalyse je eine Gerade für Oberlinie und Unterlinie geschätzt wird. Oberlinie und Unterlinie sind daher nicht notwendig parallel. Eine Mittellinie kann als mittlere Linie zwischen Oberlinie und Unterlinie oder mittels separater linearer Regression aus der Kombination der Wertefolgen von vertikalen Maxima und Minima geschätzt werden. Horizontal ist hierbei wie üblich jeweils als in Schreibrichtung und vertikal als quer zur Schreibrichtung gebraucht. Die Ziffernbreite kann bevorzugt in an sich bekannter Weise aus dem ursprünglichen Rasterbild oder dessen Konturrepräsentation geschätzt werden. Bei Ziffernfolgen mit bekannter erwarteter Ziffernanzahl kann die Ziffernbreite auch einfach als Bruchteil der Ziffernfolgenlänge angenommen werden.

Das Bild der Ziffernfolge in Liniendarstellung wird nun in schmale horizontale überlappend aufeinanderfolgende Rahmen Rₙ₋₂,Rₙ₋₁,Rₙ,Rₙ₊₁... unterteilt. Die Rahmenbreite RW beträgt lediglich einen Bruchteil, insbesondere mit 25%-40% ungefähr ein Drittel der Ziffernbreite ZW. Ein Rahmen erstreckt sich über alle drei Schreiblinien und ist in sich wieder unterteilt in drei jeweils eine der Schreiblinien umfassende Bereiche, die in vertikaler Richtung überlappen. Der die Oberlinie OL umfassende obere Bereich BO und der die Unterlinie umfassende untere Bereich BU (in der Abbildung beide mit punktierter Umrandung) erstrecken sich in vertikaler Richtung jeweils auf der der Mittellinie abgewandten Seite über die umfaßten Schreiblinien hinaus, um für die Erkennung u.U. bedeutsame Bogen noch zu erfassen. Über die vertikale Erstrekkung der Rahmen BO und BU über die Linien OL bzw. UL hinaus kann das Ausmaß der Berücksichtigung von überweiten Strichen eingestellt werden. Ein mittlerer Bereich BM, der die Mittellinie ML umfaßt, ist wie später noch erläutert vorzugsweise für eine ergänzende Merkmalsbestimmung in zwei Teilbereiche BMO und BMU oberhalb und unterhalb der Mittellinie unterteilt.

Die Rahmenpositionen sind wie in der in der Abbildung unten angeordneten Skala markiert, jeweils um eine Schrittweite SW horizontal gegeneinander versetzt. Durch die gegenüber der Rahmenbreite RW geringere Schrittweite ergibt sich eine horizontale Überlappung benachbarter Rahmen. Die horizontale Folge von Rahmen ist gleichwertig der horizontalen Verschiebung eines Rahmens in Schrittweiten SW.

In jeder Rahmenposition wird ein Merkmalsvektor mit Eigenschaften der im Rahmenausschnitt liegenden Linienabschnitte der Liniendarstellung der Ziffernfolge charakterisierenden Komponenten gebildet. Dabei werden die drei Bereiche BO, BM und BU getrennt bearbeitet. Als charakteristische Größen der Linienabschnitte wird deren Ausrichtung herangezogen, wobei vorzugsweise vier quantizierte Ausrichtungen horizontal, vertikal sowie die beiden dazwischenliegenden Diagonalrichtungen 45° nach links bzw. nach rechts geneigt (entsprechend 0°,45°,90° und 135° gegen die Schreibrichtung) als Vektorkomponenten vorgegeben werden. Jedem Bereich sind somit vier Vektorkomponenten zugeordnet. Vorzugsweise werden je zwei weitere Vektorkomponenten den beiden durch Unterteilung des mittleren Bereichs MB gebildeten Teilbereichen BMO und BMU zugeordnet, in welchen nur die diagonalen Linienanteile in diesen Teilbereichen erfaßt werden sollen. Hierdurch können auf einfache und wirkungsvolle Weise Symmetrieeigenschaften von einzelnen Ziffern ausgenutzt werden. Insgesamt ergeben sich damit 16 Vektorkomponenten, die den Merkmalsvektor V zu einer Rahmenposition bilden. Für die quantitative Bestimmung der Werte zur Besetzung der Vektorkomponenten wird vorzugsweise nicht nur binär das Auftreten von Linienabschnitten in den vorgegebenen Ausrichtungen, sondern auch die kumulierten Längenanteile der Abschnitte zu den verschiedenen Ausrichtungen bestimmt. Besonders geeignet ist hierbei die Liniendarstellung in Form von Reihen aneinander anschließender Pixel, da die jeweilige horizontale, vertikale oder diagonale Nachbarschaft von Pixeln unmittelbar als Beitrag zu den zutreffenden Ausrichtungen gezählt werden kann. Bei polygonaler Repräsentation werden zwischen zwei quantisierten Ausrichtungen orientierte Linienabschnitte vorzugsweise anteilig diesen beiden Ausrichtungen zugerechnet. Die so bestimmten kumulierten Längenanteile können noch auf die Bereichsgröße normiert werden.

Die Folge der Merkmalsvektoren zu horizontal aufeinanderfolgenden Rahmenpositionen wird als Vektorsequenz einem HMM-Erkenner zur segmentierungsfreien Erkennung der Ziffernfolge zugeführt. Das Erkennungsverfahren ist besonders vorteilhaft einsetzbar zur Erkennung von handschriftlichen und/oder verbundenen Postleitzahlen. Das Verfahren wird vorzugsweise in Verbindung mit einer Reduzierung eines Lexikons zulässiger Ziffernfolgen durch vorausgehenden Einsatz eines Einzelziffernerkenners angewandt.

### Literatur

[1] R.A. Wilkinson, J. Geist, S. Janet et al.: The First Census Optical Character Recognition System Conference. National Institute of Standards and Technology, U.S. Department Of Commerce, Gaithersburg, USA, 1992.
[2] Y. Saifullah, M.T. Manry: Classification-based segmentation of ZIP codes. IEEE Transactions on Systems Man and Cybernetics, Vol. 23, No.5., pp. 1437-1443, 1993.
[3] R. Fenrich, S. Krishnamoorthy: Segmenting Diverse Quality Handwritten Digit Strings in Near Real Time. 4^{th} Advanced Technology Conference, USPS, Vol.1, pp. 523-537, 1990.
[4] M. Shridhar, A. Badreldin: Recognition of isolated and simply connected handwritten numerals, Pattern Recognition, Vol.19, pp. 1-12, 1986.
[5] E. Mandler, M.F. Oberländer: A single pass algorithm for fast contour coding of binary images, Proceedings of the 12^{th} DAGM-Symposium, 1990 (in German).
[6] T. Caesar, J.M. Goger, A. Kaltenmeier, E. Mandler: Recognition of Handwritten Word Images by Statistical Methods. 3^{rd} Int. Workshop on Frontiers in Handwriting Recognition. Buffalo, pp. 409-416, 1993.
[7] Caesar et al.: "Preprocessing and feature extraction for a handwriting recognition system". Proc. of 2^{nd} Inernational Conf. on Document Analysis and Recognition ( ICDAR ' 93 ), Tsukuba Science City, Japan, 20-22 OCT. 1993, ISBN 0-8186- 4960-7, 1993, Los Alamitos, CA, USA, IEEE Com. Soc. Press, USA, Seiten 408 - 411.

## Patentansprüche

1. Verfahren zur Erkennung von Ziffernfolgen mit
- Erzeugung eines Rasterbildes der Ziffernfolge,
- Ableitung einer Liniendarstellung der Ziffernfolge aus dem Rasterbild,
- Schätzung von Schreiblinien,
- Unterteilung der Liniendarstellung in horizontal überlappende Rahmen, die wiederum in mehrere vertikal übereinanderliegende Bereiche unterteilt sind,
- Bestimmung von Merkmalen der in den Bereichen verlaufenden Linienabschnitte als Komponenten eines Merkmalsvektors für die Bereiche getrennt innerhalb jedes Rahmens,
- Zuführung der Merkmalsvektoren horizontal aufeinanderfolgender Rahmen einem HMM-Erkenner als Vektorfolge,
**dadurch gekennzeichnet**, daß
- als Schreiblinien eine Oberlinie, eine Unterlinie und eine Mittellinie aus der Liniendarstellung der ziffernfolge anhand der vertikalen Minima und Maxima der gewonnenen Linien geschätzt werden,
- als vertikal übereinanderliegende Bereiche der Liniendarstellung
- ein die obere Schreiblinie umfassender Bereich
- ein die untere Schreiblinie umfassender Bereich
- und ein die mittlere Schreiblinie umfassender Bereich gewählt werden, wobei die angrenzenden Bereiche vertikal überlappen und zusätzlich der die mittlere Schreiblinie umfassende Bereich in einen Teil oberhalb der mittleren Schreiblinie und einen Teil unterhalb der mittleren Schreiblinie unterteilt wird, in denen jeweils nur die diagonalen Merkmale der in ihnen verlaufenden Linienabschnitte bestimmt werden.

2. Verfahren nach Anspruch 1, **dadurch gekennzeichnet**, daß die horizontale Breite der Rahmen zwischen 25% und 40% der Breite einer Einzelziffer gewählt wird.

3. Verfahren nach Anspruch 1 oder 2, **dadurch gekennzeichnet**, daß die Oberlinie und die Unterlinie aus vertikalen Maxima bzw. Minima der Liniendarstellung mittels einer Regressionsanalyse als gerade Linien bestimmt werden.

4. Verfahren nach einem der Ansprüche 1 bis 3, **dadurch gekennzeichnet**, daß als Komponenten der Merkmalsvektoren verschiedene quantifizierte Linienausrichtungen in den einzelnen Bereichen vorgegeben werden.

5. Verfahren nach Anspruch 4, **dadurch gekennzeichnet**, daß als quantifizierte Linienausrichtungen vertikale, horizontale und diagonale Linienverläufe vorgegeben werden.

6. Verfahren nach einem der Ansprüche 1 bis 6, **dadurch gekennzeichnet**, daß die Breite einer Einzelziffer aus dem Rasterbild der Ziffernfolge abgeleitet wird.

## Claims

1. Method for recognizing sequences of numerals comprising
- generation of a screen bitmap of the sequence of numerals,
- derivation of a line representation of the sequence of numerals from the screen bitmap,
- estimation of writing lines,
- subdivision of the line representation into horizontally overlapping frames, which are in turn subdivided into a plurality of areas lying vertically one above the other,
- determination of features of the line segments running in the areas as components of a feature vector separately for the areas within each frame,
- feeding of the feature vectors of horizontally successive frames to an HMM recognition unit as a vector sequence,
characterized in that
- as writing lines, a top line, a bottom line and a middle line are estimated from the line representation of the sequence of numerals using the vertical minima and maxima of the lines obtained,
- as areas of the line representation which lie vertically one above the other,
- an area encompassing the top writing line
- an area encompassing the bottom writing line
- and an area encompassing the middle writing line are chosen, the adjoining areas overlapping vertically and, in addition, the area encompassing the middle writing line being subdivided into a part above the middle writing line and a part below the middle writing line, in each of which only the diagonal features of the line segments which run in them are determined.

2. Method according to Claim 1, characterized in that the horizontal width of the frames is chosen to be between 25% and 40% of the width of an individual numeral.

3. Method according to Claim 1 or 2, characterized in that the top line and the bottom line are determined as straight lines from vertical maxima and minima, respectively, of the line representation by means of a regression analysis.

4. Method according to one of Claims 1 the 3, characterized in that different quantified line orientations in the individual areas are predetermined as components of the feature vectors.

5. Method according to Claim 4, characterized in that vertical, horizontal and diagonal line courses are predetermined as quantified line orientations.

6. Method according to one of Claims 1 to 6, characterized in that the width of an individual numeral is derived from the screen bitmap of the sequence of numerals.

## Revendications

1. Procédé de reconnaissance de suites de chiffres comprenant
- l'élaboration d'une image tramée de la suite de chiffres,
- la déduction d'une représentation en lignes de la suite de chiffres à partir de l'image tramée,
- l'estimation de lignes d'écriture,
- la subdivision de la représentation en lignes en cadres se chevauchant horizontalement, qui à leur tour son subdivisés en plusieurs zones superposées verticalement,
- la détermination de caractéristiques des tronçons de ligne s'étendant dans les zones en tant que composantes d'un vecteur de caractéristiques pour les zones, de façon séparée à l'intérieur de chaque cadre,
- la transmission des vecteurs de caractéristiques de cadres se succédant horizontalement, à un élément de reconnaissance du type HMM (Hidden Markov Model), en tant que suite de vecteurs,
**caractérisé**
- en ce qu'en guise de lignes d'écriture on estime une ligne supérieure, une ligne inférieure et une ligne médiane à partir de la représentation en lignes de la suite de chiffres, au regard des minima et maxima verticaux des lignes de squelette représentant le contour de lignes,
- en ce que l'on choisit en tant que zones verticales superposées de la représentation en lignes
- une zone englobant la ligne d'écriture supérieure
- une zone englobant la ligne d'écriture inférieure
- et une zone englobant la ligne d'écriture médiane
les zones adjacentes se chevauchant verticalement, et en ce que la zone englobant la ligne médiane est de plus subdivisée en une partie au-dessus de la ligne d'écriture médiane et une partie en-dessous de la ligne d'écriture médiane dans lesquelles ne sont respectivement déterminées que les caractéristiques de diagonale des tronçons de ligne qui s'y étendent.

2. Procédé selon la revendication 1, **caractérisé** en ce que la largeur horizontale des cadres est choisie de manière à représenter entre 25% à 40% de la largeur d'un chiffre individuel.

3. Procédé selon la revendication 1 ou 2, **caractérisé** en ce que la ligne supérieure et la ligne inférieure sont déterminées en tant que lignes droites, à partir de maxima et de minima verticaux de la représentation en lignes, au moyen d'une analyse par régression.

4. Procédé selon l'une des revendications 1 à 3, **caractérisé** en ce qu'en guise de composantes des vecteurs de caractéristiques, on prescrit diverses orientations de ligne quantifiées, dans les zones individuelles.

5. Procédé selon la revendication 4, **caractérisé** en ce qu'en guise d'orientations de ligne quantifiées, on prescrit des tracés de ligne horizontaux, verticaux et diagonaux.

6. Procédé selon l'une des revendications 1 à 5, **caractérisé** en ce que la largeur d'un chiffre individuel est dérivée de l'image tramée de la suite de chiffres.
